# EUROPEAN PATENT SPECIFICATION

(11) **EP 1 755 036 B1**
(45) Date of publication and mention of the grant of the patent: **23.09.2009**
(21) Application number: 06017249.1
(22) Date of filing: 18.08.2006
(51) Int. Cl.: G06F 9/44

(54) **System-independent application state management**
Systemunabhängige Zustandsverwaltung von Anwendungen
Gestion d'états d'applications indépendante du système

(30) Priority: 19.08.2005 JP 2005238281
(43) Date of publication of application: 21.02.2007
(73) Proprietor: Sony Corporation, Tokyo (JP)
(72) Inventor: Ishimura, Yuji, Shinagawa-ku Tokyo (JP); Hirano, Kazumi, Shinagawa-ku Tokyo (JP); Imaizumi, Ryoichi, Shinagawa-ku Tokyo (JP); Ode, Naoki, Shinagawa-ku Tokyo (JP); Sakai, Shimon, Shinagawa-ku Tokyo (JP)
(74) Representative: Körber, Martin Hans

(56) References cited:
- EP-A2- 0 822 484
- US-A1- 2002 180 783
- HOHPE G, WOOLF B: "Enterprise Integration Patterns: Designing, Building, and Deploying Messaging Solutions" [Online] 10 October 2003 (2003-10-10), ADDISON WESLEY PROFESSIONAL , XP002407896 ISBN: 0-321-20068-3 Retrieved from the Internet: URL:http://proquest.safaribooksonline.com/ 0321200683> * page 1 - page 6 *
- GAMMA E ET AL: "Design Patterns: elements of reusable object-oriented software" DESIGN PATTERNS. ELEMENTS OF REUSABLE OBJECT-ORIENTED SOFTWARE, XX, XX, 1995, pages 139-161, XP002262137
- GIRAULT A: "Elimination of redundant messages with a two-pass static analysis algorithm" PARALLEL AND DISTRIBUTED PROCESSING, 2001. PROCEEDINGS. NINTH EUROMICRO WORKSHOP ON FEBRUARY 7-9, 2001, PISCATAWAY, NJ, USA,IEEE, 7 February 2001 (2001-02-07), pages 178-185, XP010532122 ISBN: 0-7695-0987-8

## Description

### CROSS REFERENCES TO RELATED APPLICATIONS

The present invention contains subject matter related to Japanese Patent Application JP 2005-238281 filed in the Japanese Patent Office on August 19, 2005.

### BACKGROUND OF THE INVENTION

### 1. Field of the Invention

The present invention relates to information processing apparatuses and information processing methods, recording media, and programs. In particular, the present invention relates to an information processing apparatus and an information processing method, a recording medium, and a program which are preferred for use when an application program is operated on a plurality of systems having different state definitions.

### 2. Description of the Related Art

Techniques for porting applications between different operations systems (OSs) exist. For example, Japanese Unexamined Patent Application Publication No. 2002-278777 describes a technique in which a difference in task priorities between different OSs is absorbed, allowing applications to be ported without the necessity of modifying the applications in terms of the task priorities.

Japanese Unexamined Patent Application Publication No. 2001-254227 describes another technique in which, an abstract definition of a graphic user interface (GUI) and an application are handled as a pair, and a module for use with the GUI definition of the application is prepared at the destination to which the application is to be ported. This arrangement permits portability of applications in terms of GUIs.

In addition, there is a technique for allowing porting of software by converting a set of software code (see, for example, Japanese Unexamined Patent Application Publication No. 2004-280794). Further, Japanese Unexamined Patent Application Publication No. 2000-132385 describes a technique for porting software by partially changing program code.

When it is desired that an application program can be used on various systems, i.e., in order to increase the portability of the application program, how to set a state definition of the application program is important.

Thus, schemes to be employed for defining the states of application programs depend on systems on which the application programs are intended to operate. In order to operate an application program on a plurality of systems having different state definitions, it is necessary to modify an interface for state transition and an operation for calling the interface in the application program, in accordance with the individual systems.

However, an application has internal states, and thus the portability of an application program cannot be increased simply by increasing portability in the task priority of the application, as in the technique described in Japanese Unexamined Patent Application Publication No. 2002-278777. Moreover, with this technique, an application program cannot simply be ported between different application state management mechanisms without modification.

In operation of an application program, there are a plurality of internal states which, for example, are associated with a timing of displaying a GUI and a timing at which information for generating the GUI is accessible. Therefore, porting only a GUI definition, as in the technique described in Japanese Unexamined Patent Application Publication No. 2001-254227, does not allow GUI display processing of the application program to be completely ported to another application program which operates on a system performing a different GUI display processing.

In addition, generating software by code conversion or partial changing of code produces software which is different in code from the software of a system from which the software is ported. Thus, in the technique described in Japanese Unexamined Patent Application Publication No. 2004-280794, verification such as retesting needs to be performed on the generated software. Therefore, this technique should be treated as being different from porting the entirety of the original software.

Document HOHPE G, WOOLF B: "Enterprise Integration Patterns: Designing, Building, and Developiny Messaging Solutions" [Online] 10 October 2003 (2003-10-10) ADDISON WESLEY PROFESSIONAL, XP002407896 ISBN: 0-321-20068-3 Retrieved from the Inernet: URL: http://proquest.safaribooksonline.com/0321200683> discloses a method for enabling communication between systems using different data formats. For this purpose a message translator pattern is provided for transforming the data at each level. For each layer a unit is provided for storing information indicating a relationship between instructions recognizable by the first system and instructions recognizable by the second system and for transmitting the different data between the different layers.

Document EP 0 822 484 A2 reveals a method and apparatus for enhancing the portability of an object oriented interface among multiple platforms. This document is concerned with the problem of porting an object oriented graphical user interface implementation from a native window-based platform or environment to another window-based platform or environment. Hereby, in a first phase a toolkit is defined using abstracted notifications of a window-based platform. In a second phase, which is the execution phase, notifications from any window-based system are represented as abstract notifications used to establish interaction between the window-based system and the graphical user interface toolkit. The conformance among objects is established by verifying conformance of each object with the abstracted notification using dynamic mechanisms.

Document GAMMA E et al.: "Design Patterns: elements of reusable object-oriented software" DESIGN PATTERNS. ELEMENTS OF REUSABLE OBJECT-ORIENTED SOFTWARE, XX, XX, 1995, pages 139-161, XP002262137 discloses adapters for enabling conversion of a first class interface into a second class interface by adapting the interfaces. This can be accomplished by composing an instance within the adapter and implementing the first interface class in terms of the second interface class.

Document GIRAULT A: " Elimination of redundant messages with a two-pass static analysis algorithm " PARALLEL AND DISTRIBUTED PROCESSING, 2001. PROCEEDINGS. NINTH EUROMICRO WORKSHOP ON FEBRUARY 7-9, 2001, PISCATAWAY, NJ, USA, IEEE, 7 February 2001 (2001-02-07), pages 178-185, XP010532122 ISBN: 0-7695-0987-8 relates to a method for eliminating redundant messages in programs being distributed on several computing locations with distributed memory and being executed in parallel.

The present invention has been made in view of the above circumstances, and is configured to allow an application program to operate on a plurality of systems having different state definitions.

According to an aspect of the present invention, an information processing apparatus capable of executing an application, the apparatus includes system state transition managing means for managing a transition of a state which depends on a system on which the application operates, application state transition managing means for defining the state transition of the application using a primitive element so as to manage the state transition of the application, and instruction sending/receiving means for storing information indicating a relationship between instructions each recognizable by the system state transition managing means or the application state transition managing means and, on the basis of the information, executing sending/receiving of the instructions to and from the system state transition managing means and the application state transition managing means.

Hereby, the application state transition managing means includes instruction retaining means for retaining a plurality of application state transition instructions; and which is capable of verifying the contents of the instructions retained therein and discarding, if any, those instructions among the retained instructions which can offset each other.

The instruction retaining means is further capable of executing each of the retained instructions on the basis of FIFO.

Each of the application state transition instructions retained in the instruction retaining means can contain information indicating whether or not it is necessary to wait for completion of the execution of the instruction.

The application state transition managing means can be configured to manage state transitions of a plurality of applications. Each of the application state transition instructions retained in the instruction retaining means can contain information indicative of an origin from which the instruction was requested, an application whose state is to be transitioned by the instruction, and a state intended to be transitioned to by the instruction.

The instruction sending/receiving means can store a correspondence table of instructions each recognizable by the system state transition managing means or the application state transition managing means. This instruction correspondence table serves as information indicating a relationship between the instructions each recognizable by the system state transition managing means or the application state transition managing means.

According to an aspect of the present invention, an information processing method for an information processing apparatus capable of executing an application includes the steps of causing a first module for defining a transition of a state of the application using a primitive element so as to manage the state transition to acquire a state transition command and provide the state transition command to a second module, causing the second module to convert the state transition command into an instruction recognizable by a third module for managing a state transition dependent on a system on which the application operates, causing the third module which has received the converted instruction to determine whether or not a state of the system is to be transitioned on the basis of the state transition command, and causing the second module to convert a result of the determination performed by the third module into a notification recognizable by the first module and send the notification to the first module.

The method further comprises the steps of causing the second module to retain a plurality of application state transition instructions, to verify the contents of the retained instructions and to discard, if any, those instructions among the retained instructions which can offset each other.

According to an aspect of the present invention, a computer-executable program includes a first module, a second module, and a third module. The program causes a computer to execute the steps of causing the first module for defining a transition of a state of the application using a primitive element so as to manage the state transition to acquire a state transition command and provide the state transition command to the second module, causing the second module to convert the state transition command into an instruction recognizable by the third module for managing a state transition dependent on a system on which the application operates, causing the third module which has received the converted instruction to determine whether or not a state of the system is to be transitioned on the basis of the state transition command, and causing the second module to convert a result of the determination performed by the third module into a notification recognizable by the first module and send the notification to the first module.

Hereby, the computer program further executes the steps of causing the second module to retain a plurality of application state transition instructions, to verify the contents of the retained instructions and to discard, if any, those instructions among the retained instructions which can offset each other.

According to an aspect of the present invention, a state transition dependent on a system on which an application operates is managed. State transitions of the application are defined by primitive elements so as to be managed. Information indicating a relationship between instructions each recognizable by the system or the application is retained. On the basis of the information, sending/receiving of the instructions are performed between the system and the application.

As described above, according to an aspect of the present invention, an application program can be executed, in particular, on a plurality of systems having different state definitions.

### BRIEF DESCRIPTION OF THE DRAWINGS

Fig. 1 is a block diagram illustrating a configuration of an information processing apparatus according to an embodiment of the present invention;
Fig. 2 illustrates a software stack for controlling processing performed in an information processing apparatus according to an embodiment of the present invention;
Fig. 3 illustrates state transitions managed in an application state management module;
Fig. 4 illustrates a relationship between application states and processing which can be performed by an application;
Fig. 5 illustrates a relationship between instructions (functions) each of which can be recognized by a system state management module or an application state management module;
Fig. 6 illustrates a relationship between instructions (functions) each recognizable by a system state management module and an application state management module;
Fig. 7 illustrates a relationship between instructions (functions) each of which can be recognized by a system state management module or an application state management module;
Fig. 8 illustrates a mechanism for retaining application state transition instructions; and
Fig. 9 is a flowchart illustrating processing procedure performed by an information processing apparatus according to an embodiment of the present invention.

### DESCRIPTION OF THE PREFERRED EMBODIMENTS

Before describing an embodiment of the present invention, the correspondence between the features of the claims and the specific elements disclosed in an embodiment of the present invention is discussed below. This description is intended to assure that embodiments supporting the claimed invention are described in this specification. Thus, even if an embodiment in the following detailed description is not described as relating to a certain feature of the present invention, that does not necessarily mean that the embodiment does not relate to that feature of the claims. Conversely, even if an embodiment is described herein as relating to a certain feature of the claims, that does not necessarily mean that the embodiment does not relate to other features of the claims.

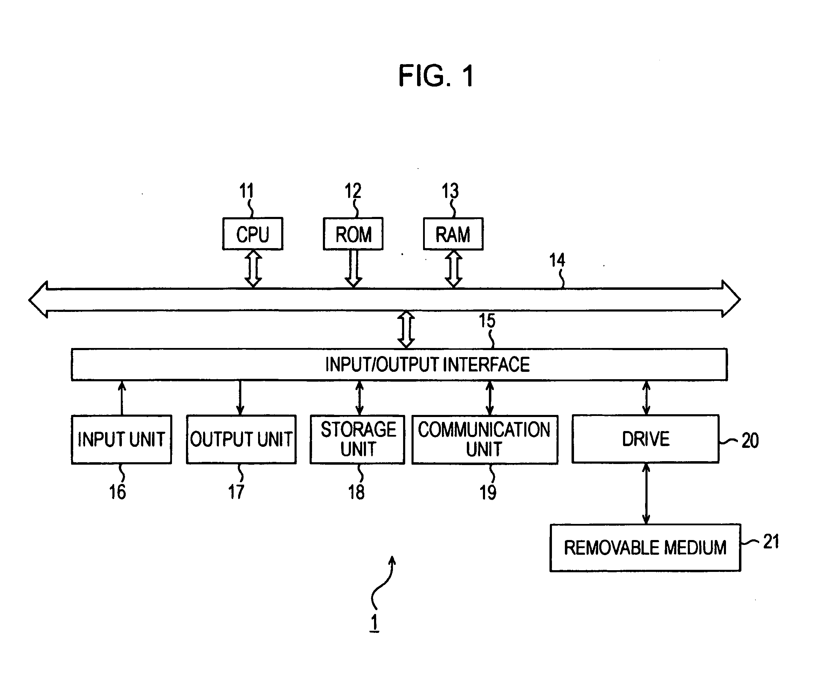

In an information processing apparatus (for example, an information processing apparatus 1 in Fig. 1) according to an embodiment of the present invention, an application can be executed. The information processing apparatus includes a system state transition managing means (for example, a system state management module 53) for managing a transition of a state which depends on a system on which the application operates, an application state transition managing means (for example, an application state management module 52) for defining a state transition of the application using a primitive element so as to manage the state transition, and instruction sending/receiving means (for example, a connection module 54) for storing information indicative of a relationship between instructions each recognizable by the system state transition managing means or the application state transition managing means and, on the basis of the information, performing sending/receiving of the instructions between the system state transition managing means and the application state transition managing means.

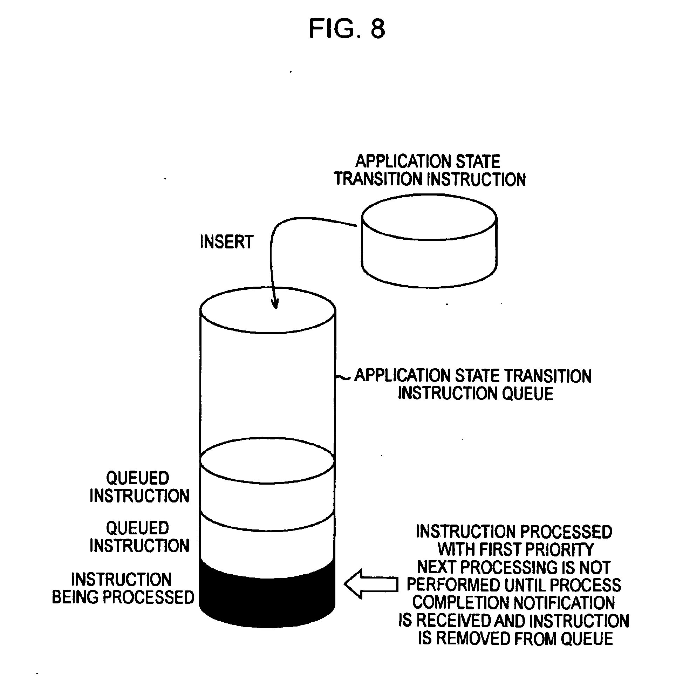

The application state transition managing means can be provided with instruction retaining means (for example, an application state transition instruction queue in Fig. 8) for retaining a plurality of application state transition instructions and executing the retained instructions on the basis of FIFO.

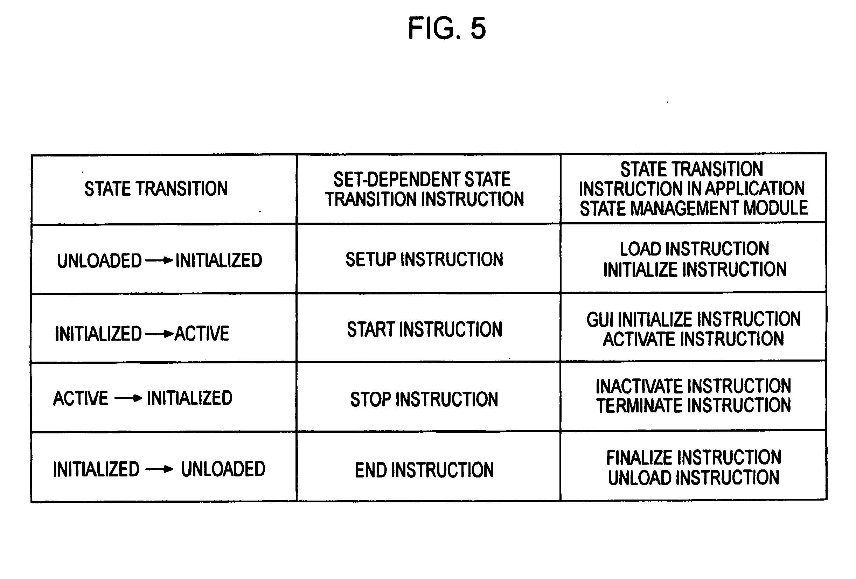

The instruction sending/receiving means can store a correspondence table of instructions (for example, a correspondence table shown in Fig. 5 to Fig. 7) as information indicating a relationship between the instructions each of which can be recognized by the system state transition managing means or the application state transition managing means.

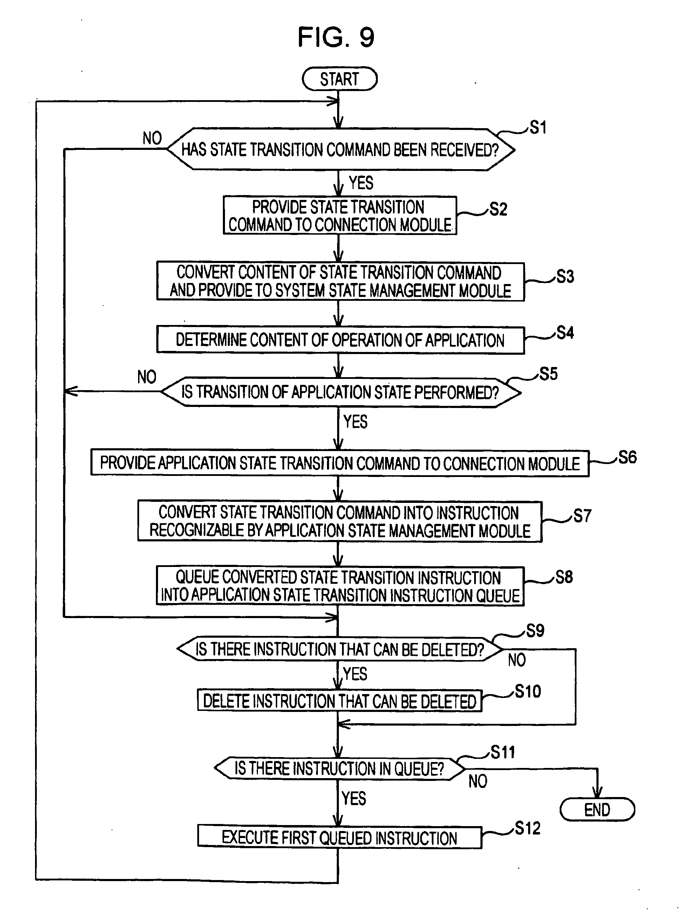

An information processing method according to an embodiment of the present invention can be applied to an information processing apparatus (for example, the information processing apparatus 1 in Fig. 1) capable of executing an application. The information processing method includes the steps of causing a first module (for example, the application state management module 52) for defining a transition of a state of the application using a primitive element so as to manage the state transition to acquire a state transition command and provide the acquired state transition command to a second module (for example, the connection module 54), (for example, processing of STEP S1 in Fig. 9), causing the second module to convert the state transition command into an instruction recognizable by a third module (for example, the system state management module 53) for managing a state transition dependent on a system on which the application operates (for example, processing of STEP S2 in Fig. 9), causing the third module which has received the converted instruction to determine on the basis of the command for state transition whether of not a state of the system is to be transitioned (for example, processing of STEP S5 in Fig. 9), and causing the second module to convert a result of the determination performed by the third module into a notification recognizable by the first module and send the notification to the first module (for example, processing of STEP S7 in Fig. 9).

A program according to an embodiment of the present invention is a computer-executable program and as a first module, a second module, and a third module. This program causes a computer to execute the steps of causing a first module (for example, the application state management module 52) for defining a transition of a state of the application using a primitive element so as to manage the state transition to acquire a state transition command and provide the acquired state transition command to a second module (for example, the connection module 54), (for example, processing of STEP S1 in Fig. 9), causing the second module to convert the state transition command into an instruction recognizable by a third module (for example, the system state management module 53) for managing a state transition dependent on a system on which the application operates (for example, processing of STEP S2 in Fig. 9), causing the third module which has received the converted instruction to determine on the basis of the command for state transition whether of not a state of the system is to be transitioned (for example, processing of STEP S5 in Fig. 9), and causing the second module to convert a result of the determination performed by the third module into a notification recognizable by the first module and send the notification to the first module (for example, processing of STEP S7 in Fig. 9).

In the following, the preferred embodiments of the present invention will BE described with reference to the accompanying drawings.

Fig. 1 is a block diagram illustrating a configuration of the information processing apparatus 1 according to an embodiment of the present invention.

A CPU (Central Processing Unit) 11 executes various processing in accordance with a program stored in a ROM (Read Only Memory) 12 or a program loaded from a storage unit 18 into a RAM (Random Access Memory) 13. The RAM 13 also stores data necessary for the execution of the processing by the CPU 11 according to need.

The CPU 11, the ROM 12, and the RAM 13 are interconnected via a bus 14. The bus 14 is also connected with an input/output interface 15.

The input/output interface 15 is also connected with an input unit 16 composed of a keyboard, a mouse, a light receiver for receiving infrared rays from a remote controller (not shown), etc., an output unit 17 composed of an LCD (Liquid Crystal Display) or the like, the storage unit 18 composed of a hard disk or the like, and a communication unit 19 for performing communication processing across a network.

The input/output interface 15 is connected to a drive 20 as necessary which is suitably mounted with a removable medium 21 such as a magnetic disk, an optical disk, a magneto-optical disk, or semiconductor memory. A computer program read from the removable medium 21 is installed in the storage unit 18 according to need.

In the CPU 11 in this information processing apparatus 1, a program stored in the ROM 12 or a program loaded from the storage unit 18 into the RAM 13 is executed.

There may be a case where a scheme for defining a state of an application program (hereinafter also referred to as an application) to be executed by the CPU 11 depends on the system (or apparatus) on which the application operates. In such a case, in order to operate the application on a plurality of systems having different application state definitions, it is necessary to modify an interface for state transitions in the application and an operation for calling the interface, in accordance with the individual systems.

However, a module capable of determining whether or not a state of an application can be changed depends on a set of modules in the system on which the application operates.

Thus, in order for an application to have portability, it is necessary that the application not be dependent on a module set in a system but be capable of co-operating with a module which deals with the determination of application state change.

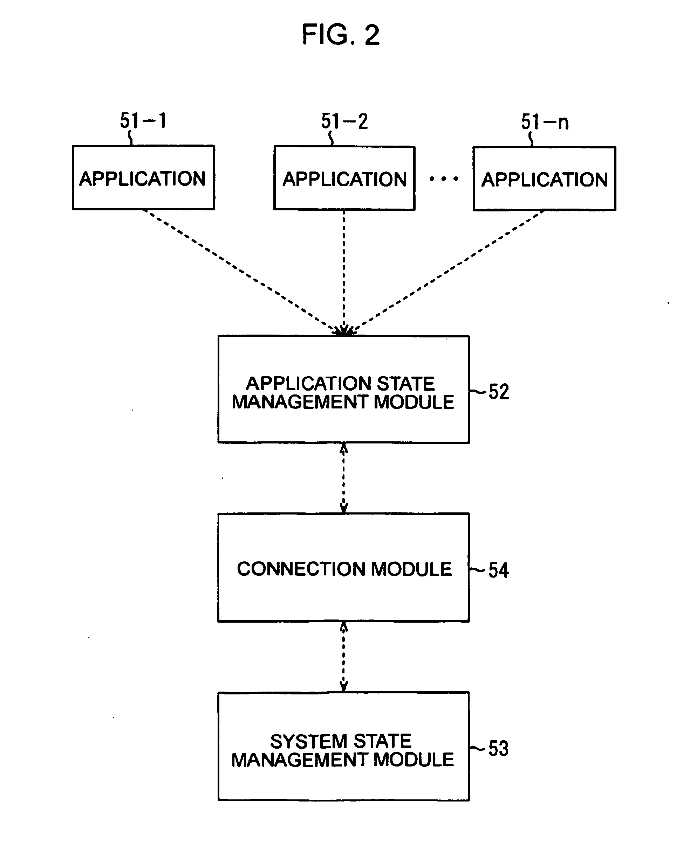

Fig. 2 is a module structure diagram (software stack) of a system to which an embodiment of the present invention is applied.

When each of an application 51-1 to an application 51-n is executed, a feature (i.e., a function) for executing an internal state transition defined by the application state management module 52 is registered in the application state management module 52. The application state management module 52 can change an internal state of each application using the registered function. Hereinafter, each of the applications 51-1 to 51-n is simply referred to as an application 51 when it is not necessary to discriminate between the individual applications 51-1 to 51-n.

With a view to achieving portability of the application 51, a state of each application is decomposed into primitive elements so as to be defined. The applications 51 is configured to perform a state transition in accordance with the state definition.

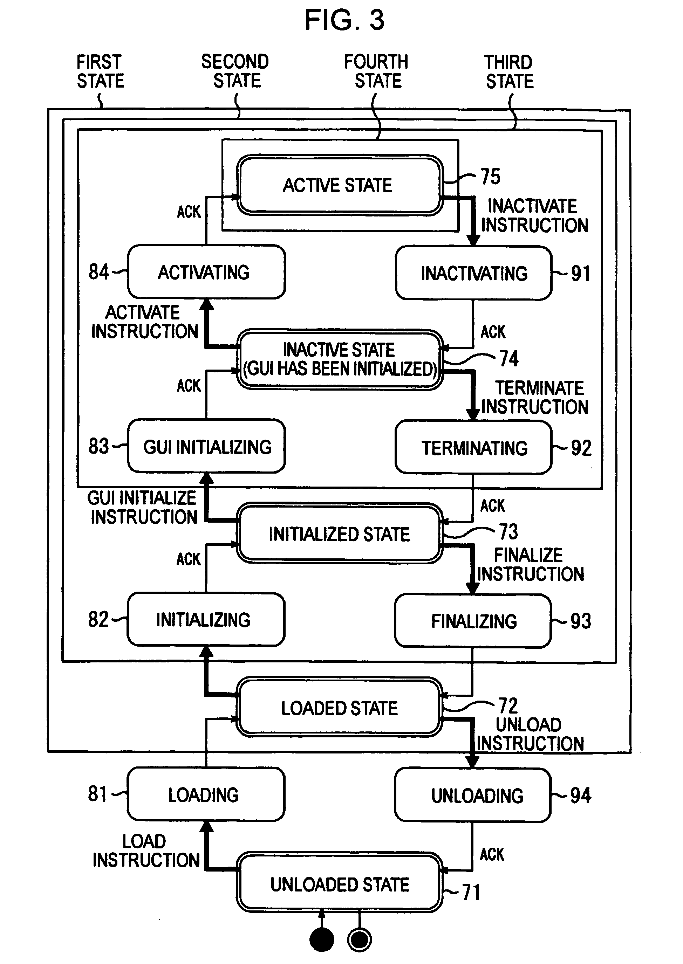

Referring to Fig. 3, internal state transitions of the application 51 which are defined by the application state management module 52 will be described. In this figure, states enclosed by double lines denote states defined as stationary states of the applications. States enclosed by single lines denote states which are in transition.

The states of each application are decomposed into five states and each of the decomposed states is defined. The states include an unloaded state 71, a loaded state 72, an initialized state 73, an inactive state 74, and an active state 75. In a first state of one of the application 51, in which the unloaded state 71, the loaded state 72, the initialized state 73, the inactive state 74, and the active state 75 are included, the application 51 is expanded on a memory. In a second state, in which the initialized state 73, the inactive state 74, and the active state 75 are included, the application can be used by another application or module (e.g., an application can be used in the background). In a third state, in which the inactive state 74 and the active state 75 are included, a GUI corresponding to the application can be seen by a user. Only in a fourth state, can the application receive an operation input such as a key event.

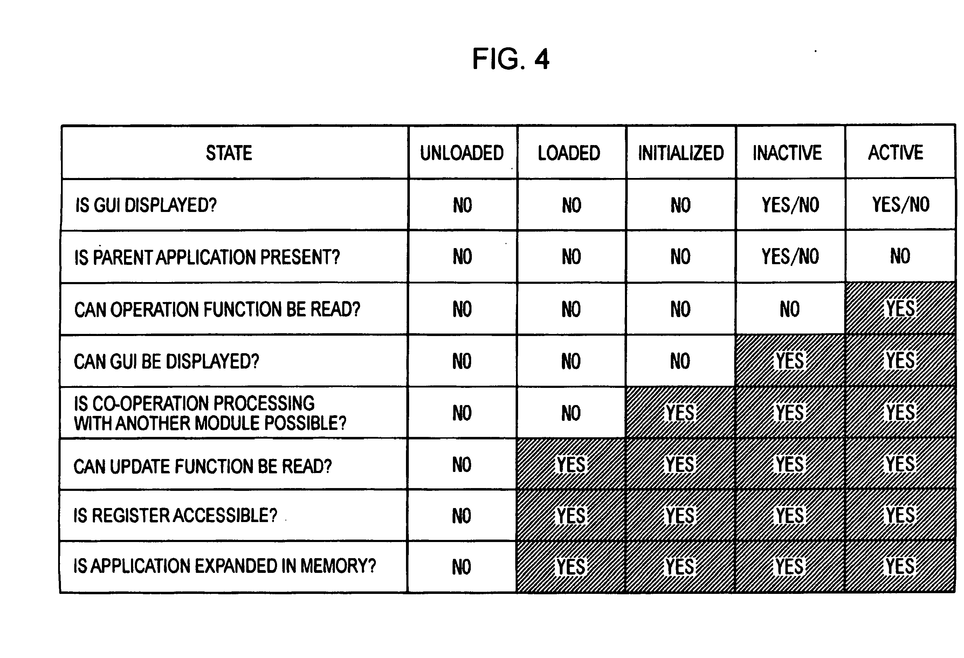

An example which illustrates in detail a relationship between the individual states and processing which can be performed in the states is shown in Fig. 4.

A GUI is not displayed in the unloaded state 71, the loaded state 72, and the initialized state 73. In the inactive state 74 and the active state 75, a GUI can or cannot be displayed, depending on a processing state (e.g., a GUI may not be displayed in background processing).

Only in the inactive state 74, can a parent application be present. However, there may not a parent application even in the inactive state 74. Only in the active state 75, can an operation function be read.

A GUI can be displayed in the inactive state 74 and the active state 75. However, a GUI is not necessarily displayed in these states. For example, when background processing is in progress or when a parent application is present in the inactive state 74 and the active state 75, a GUI may not be displayed.

In the unloaded state 71 and the loaded state 72, co-operation with another module is allowed. However, in the initialized state 73, inactive state 74, and the active state 75, co-operation with another module is allowed.

In addition, reading of an update function and the use of a register are allowed in the loaded state 72, initialized state 73, inactive state 74, and active state 75, but not in the unloaded state 71. In the unloaded state 71, the application is not expanded in the memory.

Thus, the various states in a system are discomposed into the five states (unloaded state 71, loaded state 72, initialized state 73, inactive state 74, and active state 75) and each of the states are defined. The application programs designed on the basis of this state definition scheme, as well as the application state management module 52, do not depend on apparatuses and systems.

In the following, transitions between each of the states described above will be described in detail.

When a load instruction is generated while the application 51-1, for example, is in the unloaded state 71 where the application 51-1 is not expanded, the state of the application 51-1 transitions, via a state in which loading of the application 51-1 is in progress (a loading state 81), to the loaded state 72 where the application 51-1 is expanded in the memory. When an initialize instruction is generated while the application is in the loaded state 72, the application state transitions to the initialized state 73 via a state in which initialization processing is in progress (an initializing state 82).

When a GUI initialize instruction is generated while the application 51-1 is in the initialized state 73, the application state transitions to the inactive state 74 (a GUI has been initialized) via a state in which GUI initialization processing is in progress (a GUI initializing state 83). In the inactive state 74, no processing associated with the application 51-1 is performed, but a GUI corresponding to the application 51-1 can be displayed. This state represents, for example, a situation where, in a system (multitask system) in which a plurality of applications can be executed and windows corresponding to the individual applications are displayed, the application 51-1 is not currently used (a window corresponding to the application 51-1 is not active).

When an activate instruction is generated while the application 51-1, for example, is in the inactive state 74, the application state transitions to the active state 75 via a state in which activation processing is in progress (an activating state 84). This state transition represents, for example, a situation where, in a multitask system where plurality of applications can be executed at the same time and windows corresponding to the applications are displayed, an inactive window corresponding to the application 51-1 which is not currently used is clicked, resulting in the activation of the window (transition to the active state 75). In the active state 75, an operation input can be received and processing in response to the operation input can be performed.

When an inactivate instruction is generated while the application is in the active state 75, the application state transitions to the inactive state 74 via a state in which inactivation processing is in progress (an inactivating state 91). This state transition represents, for example, a situation where, in a multitask system where plurality of applications can be executed at the same time and windows corresponding to the applications are displayed, an inactive window of one of the applications other than the application 51-1 which is not currently used is clicked, resulting in a state transition of the application corresponding to the clicked widow to the active state 75 and a state transition of the application 51-1 to the inactive state 74 (a window corresponding to the application 51 is changed so as not to be active).

When a terminate instruction is generated while the application 51-1 is in the inactive state 74, the application state transitions to the initialized state 73 via a state in which termination processing is in progress (a terminating state 92). When a finalize instruction is generated while the application is in the initialized state 73, the application state transitions to the loaded state 72 via a state in which finalization processing is in progress (a finalizing state 93). When an unload instruction is generated while the application 51-1 is in the loaded state 72, the application state transitions to the unloaded state 71 via a state in which unloading processing is in progress (an unloading state 94).

A transition in a state of the application 51 is executed on the basis of state determination. The state determination is performed on the basis of the state of the entire set of modules including, for example, an execution state of another application and a hardware state. However, the state of the entire set is determined for each module set, i.e., state determination of the entire set is set-dependent. When the application state management module 52 has a mechanism for determining whether or not a state of the application 51 is to be transitioned, it is necessary to prepare the application state management module 52 for each module set. In other words, the application state management module 52 can ensure portability which does not depend on a set in a system, by not having a state determination function.

Accordingly, the application state management module 52 does not have a mechanism for determining a state of the 51 is to be transitioned, so as to ensure portability which is not dependent on a set in a system.

The system state management module 53 is a module having a mechanism for determining whether or not a state of the application 51 is to be transitioned. In other words, the system state management module 53 is a set-dependent module. Upon receiving a request for a transition in an application state, the application state management module 52 does not analyze the request but request the system state management module 53 to perform determination for the request.

There is a case, for example, where the application state management module 52 and the system state management module 53 operates separately on different microcomputers or where the application state definition of the system state management module 53 is different from that of the application state management module 52. In such a case, the connection module 54, which is provided with a communication function between the microcomputers and a mechanism for converting a request (command) for application state transition, is implemented as an intermediary between the application state management module 52 and the system state management module 53.

The connection module 54 receives from the application state management module 52 registrations of a feature (function) for receiving a request for application state transition from the application state management module 52 and a feature (function) for receiving a notification of completion of application state transition. In addition, the connection module 54 stores information indicative of a relationship between instructions (functions) each recognizable by the application state management module 52 or the system state management module 53, so as to send an instruction for application state transition to the application state management module 52. On the basis of the information, the connection module 54 intermediates between application state management module 52 and the system state management module 53 for sending and receiving the instructions.

In Fig. 5 to Fig. 7, correspondence tables of instructions (functions) are shown, as examples of such information indicating a relationship between instructions (functions) each of which can be recognized by the system state management module 53 or the application state management module 52.

For example, an example of a correspondence table contained in the connection module 54 which is associated with a system A is shown in Fig. 5.

A setup instruction in the system A is an instruction which causes the transition from the unloaded state 71 to the initialized state 73 in the state transitions managed by the application state management module 52. The setup instruction can be converted into the load instruction plus the initialize instruction which are recognizable by the application state management module 52. A start instruction in the system A is an instruction which causes the transition from the initialized state 73 to the active state 75. The start instruction corresponds to the GUI initialize instruction plus the activate instruction which are recognizable by the application state management module 52.

A stop instruction in the system A is an instruction which causes the transition from the active state 75 to the initialized state 73 in the state transitions managed by the application state management module 52. The stop instruction corresponds to the inactivate instruction plus the terminate instruction which are recognizable by the application state management module 52. An end instruction in the system A is an instruction which causes the transition from the initialized state 73 to the unloaded state 71 in the state transitions managed by the application state management module 52. The end instruction can be converted into the finalize instruction plus the unload instruction which are recognizable by the application state management module 52.

Thus, even when an instruction in the system A intends to transition a plurality of states in the state transitions managed by the application state management module 52, the connection module 54 can convert the instruction into an instruction which can be recognized by the application state management module 52. Thus, the connection module 54 can intermediate between the application state management module 52 and the system state management module 53 for sending and receiving the instructions.

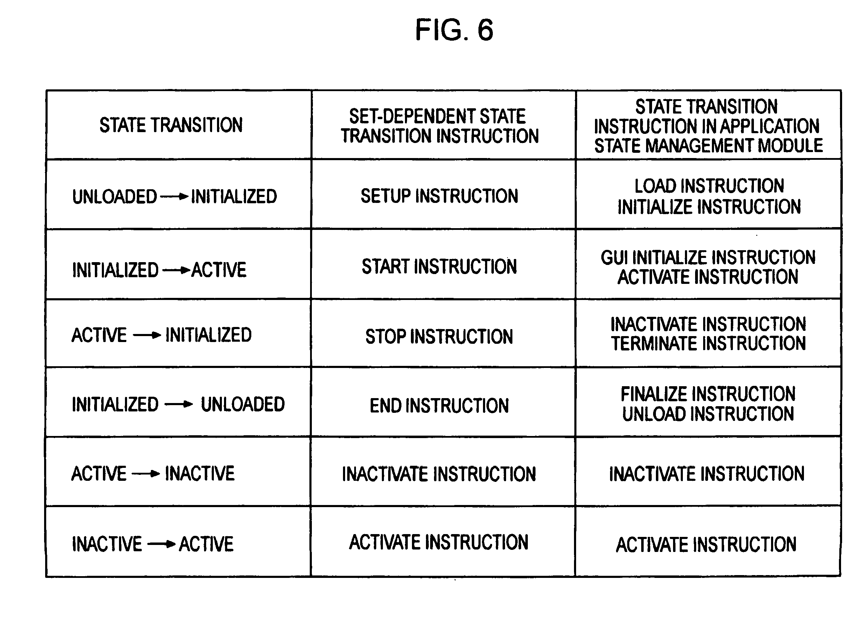

Referring to Fig. 6, an example of a correspondence table contained in the connection module 54, which is associated with a system B.

The setup instruction, the start instruction, the stop instruction, and the end instruction in the system B have the same correspondence relationship with the instructions recognizable by the application state management module 52 as in the system A. In addition to this, in the system B, there is the inactivate instruction which causes the transition from the active state 75 to the inactive state 74 in the state transitions managed by the application state management module 52. Moreover, in the system B, there is the activate instruction which causes the transition from the inactive state 74 to the active state 75.

Specifically, there may be a case in a system where there are an instruction in the application state management module 52 which has a one-to-one correspondence with an instruction in the system state management module 53 and an instruction in the application state management module 52 which does not have a one-to-one correspondence with an instruction in the system state management module 53. Even in such a case, the connection module 54 can convert a received instruction into an instruction which can be recognized by the application state management module 52 and the system state management module 53, so as to intermediate between the application state management module 52 and the system state management module 53 in their sending/receiving of the instructions.

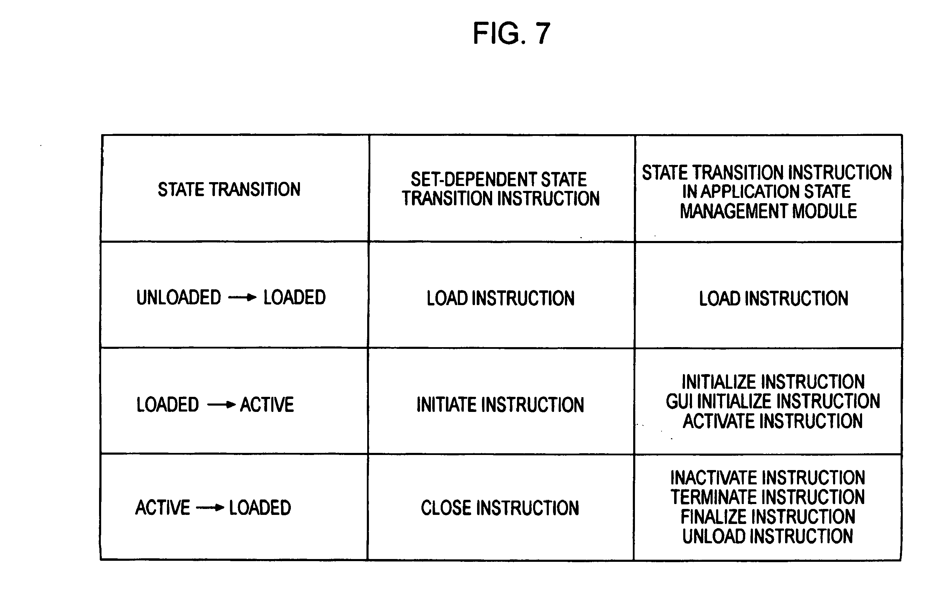

Fig. 7 illustrates an example of a correspondence table contained in the connection module 54, which is associated with a system C.

The load instruction in the system C can be recognized by the application state management module 52 and causes the transition to the unloaded state 71 to the loaded state 72 in the state transitions managed by the application state management module 52. An initiate instruction in the system C is an instruction which causes the state transition from the loaded state 72 to the active state 75 in the system transitions managed by the application state management module 52. The initiate instruction corresponds to the initialize instruction plus the GUI initialize instruction plus the activate instruction which can be recognized by the application state management module 52.

A close instruction in the system C is an instruction which causes the state transitions from the active state 75 to the unloaded state 71 in the state transitions managed by the application state management module 52. The close instruction corresponds to the inactivate instruction plus the terminate instruction plus the finalize instruction plus the unload instruction.

Thus, regardless of how the instructions in the application state management module 52 correspond to the instructions in the system state management module 53, the connection module 54 can register the correspondence relationships between these instructions on the basis of the internal states defined by the application state management module 52. Then, the connection module 54 converts a received request into instructions which can be recognized by each of the modules, so as to intermediate between the modules for their sending/receiving of the instructions.

Specifically, the application state management module 52 manages which state among the states shown in Fig. 3 each of the application 51-1 to the application 51-n is in. When receiving a request for a state transition of either one of the applications 51-1 to 51-n, the application state management module 52 sends the connection module 54 a request for application state transition so as to request the system state management module 53 to perform a state transition operation. The connection module 54 converts the content of the received request using the correspondence tables shown in Fig. 5 to Fig. 7 and sends the converted instruction to the system state management module 53. Upon receiving the request for application state transition, the system state management module 53 determines the content of an operation to be performed on the request, i.e., whether or not state transition can be executed, on the basis of the state of another application and the state of another module or hardware.

If the system state management module 53 determines that the state transition is to be performed, a state transition instruction is provided to the connection module 54. Upon receiving the instruction from the system state management module 53, the connection module 54 converts the instruction into an instruction written in the form that can be recognized by the application state management module 52 (i.e., the load instruction, GUI initialize instruction, activate instruction, inactivate instruction, terminate instruction, finalize instruction, unload instruction), for example, using one of the correspondence tables in Fig. 5 to Fig. 7 and sends the converted instruction to the application state management module 52. Upon receiving the application state transition instruction, the application state management module 52 calls the function for application state transition which has been registered by the application 51. Specifically, the state of the application 52 enters into a transitioning state (state enclosed by a single line in Fig. 3). Then, when the application state management module 52 receives a notification of completion of the state transition operation from the application 51, i.e., an ACK is provided to the application state management module 52, the state transition operation is completed.

Thus, the applications 51 and the application state management module 52 can be implemented without depending on a set of modules in a system. By changing the connection module 54, the application 51 and the application state management module 52 can be ported to a plurality of systems. Specifically, by using the application state management module 52 which does not depend on a set which manages state transitions in accordance with a predetermined state definition and a connection module 54 which absorbs a difference between the set-independent module and the set-dependent module, the application 51 can operate on a plurality of systems without changing the implementation thereof.

In addition, the use of the connection module 54 can ensure normal operation of any application program on a plurality of different apparatus or sets, as long as it is designed on the basis of predetermined state transitions defined by the application state management module 52, which permits increased application portability. Moreover, any application, as long as it is designed on the basis of a predetermined state transition defined by the application state management module 52, can display a GUI in an identical form of display even when the application program is executed on a different system.

The operation of the application state transition described above may include processing which should not be interrupted by another module. In such a case, it is necessary to ensure the completion of the application state transition operation. In addition, the application state transition may not be one primitive state transition but include a plurality of transitions. Therefore, when the operation of application state transition is triggered, it is necessary that a plurality of state transition instructions can be issued. Further, among the state transitions instructions which have been issued, some can offset each other. Executing all of the issued instructions results in redundancy of processing and a long processing time.

Thus, a mechanism for retaining a plurality of application state transition instructions is prepared so that processing for instructions retained therein are sequentially executed in response to a notification of completion of the execution of an application state transition instruction. This mechanism can receive.a plurality of application state transition instructions when a state transition event occurs, ensure completion of the individual instructions, and sequentially execute the individual instructions. In addition, this mechanism is capable of verifying the contents of the instructions retained therein and discarding, if any, those instructions among the retained instructions which can offset each other. This as a result can decrease time necessary for completing the execution of all stacked application state transition instructions.

Specifically, an application state transition instruction queue is prepared as shown in Fig. 8, as such a retaining mechanism as described above for ensuring completion of the execution of each application state transition instruction and the sequential execution of each application state transition instruction. This application state transition instruction queue is a FIFO (first-in first-out) queue.

Then, as illustrated in Fig. 8, the application state transition instructions are sequentially queued in the order in which the instructions are generated. Thus, the first priority for execution is given to the instruction which has been generated earlier than the other queued instructions. An instruction object to be queued contains information concerning which module requests the execution of the instruction, which application is to undergo a state transition by the instruction, and which state the state of the application is transitioned to. The instruction object also contains information concerning whether or not completion of the execution of the instruction needs to be waited, data necessary for a transition operation, and the size of the data.

As described above, an instruction object to be queued is configured to contain information indicating whether or not waiting for completion of the execution of the instruction is necessary. With this configuration, when the processing is in progress for an instruction for which waiting for completion is determined to be necessary, processing for the next instruction will not be executed until a notification of completion of the processing of the instruction is sent from the application 51 that is undergoing the state transition. Thus, the application 51 can ensure completion of the processing of its state transition.

For example, when the application 51-1 is in the active state 75, it is determined that an instruction which instructs a state transition of the application 51-2 to the active state 75 is executed, and, as a result, that the state of the application 51-1 transitions to the inactive state 74 and the state of the application 51-2 transitions to the active state 75. In such a case, the inactive instruction of the application 51-1, the initialize instruction of the application 51-2, the GUI initialize instruction, and the activate instruction are queued into the application state transition instruction queue of the application state management module 52.

There may be a case where instructions which conflict each other are stacked in the queue for an identical application due to, for example, user operations which have been repeated at short intervals. Such a case occurs, for example, when a user erroneously performs an input operation and thus instructions of transitions to the active state 75 are alternately issued to both the application 51-1 and the application 51-2 in a short time period.

In this case, the user expects the application state to immediately be the one intended by his or her last operation input. However, when it is configured such that the state transition instructed by the last operation input is not executed until all queued instructions have been executed, a long time period is necessary for achieving the application state which was last instructed.

Thus, in a case where the application state transition instruction queue of the application state management module 52 contains conflicting instructions, these instructions are deleted from the application state transition instruction queue. Such conflicting instructions include the activate instruction and the inactivate instruction for an identical application, the GUI initializing instruction and the terminate instruction, the initialize instruction and the finalize instruction, and the load instruction and the unload instruction.

With this arrangement, redundant processing in the queue can be omitted, allowing the number of steps for reaching the application state last instructed to be reduced. Moreover, the queuing processing using a FIFO stack is desirable in performing asynchronous sending/receiving of instructions and notifications between a plurality of microcomputers.

Thus, according to an embodiment of the present invention, it is possible that state transition instructions are sequentially executed while completion of a state transition is waited as necessary. Therefore, a difference between applications in their task priorities does not affect application state transitions, and further, an application can be ported onto a mechanism having a different application state transition management configuration.

Referring now to a flowchart in Fig. 9, a processing procedure to be executed in an information processing apparatus according to an embodiment of the present invention will be described.

At STEP S1, the application state management module 52 determines whether or not a command for transitioning a state (state transition command) from any module (for example, any of the application 51-1 to the application 51-n). If, in STEP S1, it is determined that a state transition command is not received, the processing procedure proceeds to STEP S9 which will be described below.

If it is determined that a command for a state transition is received in STEP S1, the application state management module 52 provide the application state transition command to the connection module 54, at STEP S2.

At STEP S3, the connection module converts the state transition command so that the system state management module 53 can recognize the content of the state transition command and provides the converted command to the system state management module 53.

At STEP S4, the system state management module 53 acquires the converted application state transition command (request) from the connection module 54 and determines a content of the operation of the application. Specifically, the system state management module 53 determines whether or not the state transition of the application can be performed, on the basis of the current state of the system or requests from other applications.

At STEP S5, the system state management module 53 determines whether or not the state transition of the application is executed. If it is determined that the state transition is not executed in STEP S5, the processing procedure proceeds to STEP S9 which will be described below.

If, in STEP S5, it is determined that the state transition of the application is executed, the system state management module 53 provides the application state transition command to the connection module 54, at STEP S6.

At STEP S7, the connection module 54 converts the state transition command to an instruction which can be recognized by the application state management module 52 and provides the converted instruction to the application state management module 52.

At STEP S8, the application state management module 52 inserts the converted state transition instruction into the application state transition instruction queue described with reference to Fig. 8.

Processing of STEP S9 is performed, if, it is determined that a state transition command has not been received in STEP S1, if it is determined that a state transition is not executed in STEP S5, or after the processing of STEP S8 is performed. At STEP S9, the application state management module 52 determines whether or not the application state transition instruction queue contains an instruction which can be deleted.

If, in STEP S9, it is determined that there is an instruction which can be deleted in the queue, such as the activate instruction and the inactivate instruction for an identical application, the application state management module 52 deletes the instructions that can be deleted from the queue, at STEP S10.

If, in STEP S9, it is determined that the application state transition instructions queue does not contain an instruction which can be deleted, or after the processing of STEP S10, the application state management module 52 determines if any instruction remains in the application state transition instruction queue, at STEP S11.

If, in STEP S11, it is determined an instruction remains in the application state transition instruction queue, the application state management module 52 executes the instruction that has first been queued among the remained instructions, at STEP S12. Then the processing procedure returns to STEP S1 so as to be repeated.

If, in STEP S11, it is determined that no instruction remains in the application state transition instruction queue, the processing procedure is terminated.

As described in the foregoing, the state transitions of an application are managed by the application state management module 52, and sending/receiving of the instructions or the like between the application state management module 52 and the system state management module 53 are intermediated by the connection module 54. With this arrangement, the application which is not dependent on a system can be executed.

Thus, according to an embodiment of the present invention, each of the application 51-1 to the application 51-n can be ported to a system having a different application state definition (i.e., a system containing a different system state management module, or in other words, hardware controlled by a different system state management module), without the necessity of modifying each of the applications 51-1 to 51-n and the application state management module 52.

In addition, by implementing an embodiment of the present invention, a collision which may occur between state transition operations performed on a plurality of applications can be avoided, since the system state management module 53 determines whether of not a state transition of each of the application 51-1 to 51-n can be performed although the state transitions are managed by the application state management module 52.

Further, according to an embodiment of the present invention, a mechanism for retaining a plurality of application state transition instructions is prepared. With this mechanism, retained instructions can be sequentially executed in response to a notification of completion of a state transition. Thus, when an application state transition event occurs, a plurality of application state transition instructions can be received, and further, the application state transition instructions can be sequentially executed while completion of the execution of each instruction is ensured. Further, by preparing a mechanism for retaining a plurality of application state transition instructions, the contents of the retained instructions can be verified. If it is determined that there are instructions which can offset each other in the mechanism, the offsetting instructions can be deleted. Accordingly, redundant processing can be omitted in a state transition operation, which reduces time necessary for completing a plurality of stacked application state transitions.

Moreover, the present invention can be applied even in a case the application state management module 52 and the system state management module 53 are separately implemented in different microcomputers, and instructions are asynchronously transmitted to the individual modules.

As described above, a state of an application is decomposed into primitive elements and each of the elements is defined. The application is implemented in accordance with the definitions. Then, between the application and a module (the system state management module 53, in the present embodiment) configured to handle the state transitions of the application which depend on a system on which the application operates, a module (the application state management module 52, in the present embodiment) configured to define state transitions of the application using the primitive elements described above so as to manage the state transitions, and a module (the connection module 54, in the present embodiment) configured to absorb a difference in application state definitions between the module configured to define state transitions using primitive elements so as to manage the state transitions described above and the module configured to handle the state transitions of the application which depend on a system on which the application operates are provided. With this arrangement, application portability which does not depend on systems can be realized.

Furthermore, a mechanism for retaining a plurality of application state transition instructions is provided in the module (the application state management module 52, in the present embodiment) configured to define state transitions of the application using the primitive elements described above so as to manage the state transitions. The mechanism, in response to a notification of completion of an application state transition, sequentially executes processing for instructions retained therein. In addition, with this arrangement, when an event of application state transition occurs, a plurality of application state transition instructions can be received, and further, application state transition can sequentially be performed while completion of the execution of the individual instructions is ensured. When the instructions retained in the mechanism for retaining a plurality of application state transition instructions are sequentially executed, the contents of the retained instructions are verified so that instructions which can offset each other can be deleted. This decreases time necessary for completion of the application state transition.

The processing procedures described above can be executed by hardware as well as by software. When the processing procedures are executed by software, a program constituting the software is installed from a recording medium to a computer incorporated in dedicated hardware or a general purpose personal computer capable of executing various functions by installing various programs.

This recording medium may be the removable medium 21 such as, as shown in Fig. 1, the magnetic disc (including a flexible disk), the optical disc (including a CD-ROM (Compact Disc-read Only memory)), the a magneto-optical disk (including an MD^{™} (Mini-Disk)), or the semiconductor memory.

It is noted that, in the present specification, the steps which describe the program recorded in or on a recording medium may be but need not necessarily be processed in a time series in the order as described, and include processing which is executed parallelly or individually with out being processed in a time series.

Further, in the present specification, the term "system" is used to represent an entire apparatus composed of a plurality of apparatuses.

## Claims

1. An information processing apparatus (1) capable of executing an application, the apparatus comprising:
system state transition managing means (53) for managing a transition of a state which depends on a system on which the application operates;
application state transition managing means (52) for defining the state transition of the application using a primitive element so as to manage the state transition of the application; and
instruction sending/receiving means (54) for storing information indicating a relationship between instructions each recognizable by the system state transition managing means (53) or the application state transition managing means (52) and, on the basis of the information, executing sending/receiving of the instructions to and from the system state transition managing means (53) and the application state transition managing means (52),
wherein the application state transition managing means (52) includes instruction retaining means for retaining a plurality of application state transition instructions; and which is capable of verifying the contents of the instructions retained therein and discarding, if any, those instructions among the retained instructions which can offset each other.

2. The information processing apparatus (1) of claim 1,
wherein instruction retaining means is adapted to execute each of the retained instructions on the basis of FIFO.

3. The information processing apparatus of claim 2,
wherein each of the application state transition instructions retained in the instruction retaining means includes information indicating whether or not it is necessary to wait for completion of the execution of the instruction.

4. The information processing apparatus of claim 2 or 3,
wherein:
the application state transition managing means (52) can manage state transitions of a plurality of applications; and
each of the application state transition instructions retained by the instruction retaining means includes information on an origin from which the instruction was requested, an application whose state is to be transitioned by the instruction, and a state intended to be transitioned to by the instruction.

5. The information processing apparatus of one of the claims 1 to 4,
wherein the instruction sending/receiving means has a correspondence table of instructions each recognizable by the system state transition managing means (53) or the application state transition managing means (52), the instruction correspondence table serving as information indicating a relationship between the instructions each recognizable by the system state transition managing means (53) or the application state transition managing means (52).

6. An information processing method for an information processing apparatus capable of executing an application, the method comprising the steps of:
causing a first module for defining a transition of a state of the application using a primitive element so as to manage the state transition to acquire a state transition command and provide the state transition command to a second module;
causing the second module to convert the state transition command into an instruction recognizable by a third module for managing a state transition dependent on a system on which the application operates;
causing the third module which has received the converted instruction to determine whether or not a state of the system is to be transitioned on the basis of the state transition command;
causing the second module to convert a result of the determination performed by the third module into a notification recognizable by the first module and send the notification to the first module; and
causing the second module to retain a plurality of application state transition instructions, to verify the contents of the retained instructions and to discard, if any, those instructions among the retained instructions which can offset each other.

7. A computer-executable program
wherein:
the program comprises a first module, a second module, and a third module; and
the program causes a computer to execute the steps of
causing the first module for defining a transition of a state of the application using a primitive element so as to manage the state transition to acquire a state transition command and provide the state transition command to the second module,
causing the second module to convert the state transition command into an instruction recognizable by the third module for managing a state transition dependent on a system on which the application operates,
causing the third module which has received the converted instruction to determine whether or not a state of the system is to be transitioned on the basis of the state transition command,
causing the second module to convert a result of the determination performed by the third module into a notification recognizable by the first module and send the notification to the first module; and
causing the second module to retain a plurality of application state transition instructions, to verify the contents of the retained instructions and to discard, if any, those instructions among the retained instructions which can offset each other.

8. A recording medium having recorded thereon the program of claim 7.

## Patentansprüche

1. Eine Informationsverarbeitungsvorrichtung (1) geeignet zum Ausführen einer Anwendung, wobei die Vorrichtung umfasst:
ein Systemzustandsübergangs-Verwaltungsgerät (53) zum Verwalten eines Übergangs eines Zustands, der von dem System abhängt, auf welchem die Anwendung operiert;
ein Anwendungszustandsübergangs-Verwaltungsgerät (52) zum Definieren des Zustandsübergangs der Anwendung unter Verwendung eines primitiven Elements, um den Zustandsübergang der Anwendung zu verwalten; und
ein Anweisungs-Sende/Empfangs-Gerät (54) zum Speichern von Informationen betreffend eine Beziehung zwischen Anweisungen, von denen jede von dem Systemzustandsübergangs-Verwaltungsgerät (53) oder dem Anwendungszustandsübergangs-Verwaltungsgerät (52) erkannt werden kann, und, basierend auf den Informationen, zum Ausführen des Sendens/Empfangens der Anweisungen zu und von dem Systemzustandsübergangs-Verwaltungsgerät (53) und dem Anwendungszustandsübergangs-Verwaltungsgerät (52),
wobei das Anwendungszustandsübergangs-Verwaltungsgerät (52) ein Anweisungszurückhaltemittel umfasst zum Zurückhalten einer Vielzahl von Anwendungszustandsübergangsanweisungen; und welches geeignet ist zum Verifizieren des Inhalts der darin zurückgehaltenen Anweisungen und zum Verwerfen, wenn überhaupt, derjenigen Anweisungen innerhalb der zurückgehaltenen Anweisungen, die sich gegenseitig aufheben können.

2. Die Informationsverarbeitungsvorrichtung (1) gemäß Anspruch 1, wobei das Anweisungszurückhaltemittel geeignet ist, jede der zurückgehaltenen Anweisungen auszuführen basierend auf einem FIFO.

3. Die Informationsverarbeitungsvorrichtung (1) gemäß Anspruch 2,
wobei jede der Anwendungszustandsübergangsanweisungen, welche in dem Anweisungszurückhaltemittel zurückgehalten werden, Informationen umfasst zum Anzeigen, ob es nötig ist oder ob es nicht nötig ist, auf die Beendigung der Ausführung des Anweisung zu warten.

4. Die Informationsverarbeitungsvorrichtung (1) gemäß Anspruch 2 oder 3,
wobei das Anwendungszustandsübergangs-Verwaltungsgerät (52) die Zustandsübergänge von einer Vielzahl von Anwendungen verwalten kann und
jeder der Anwendungszustandsübergangsanweisungen, welche bei dem Anweisungszurückhaltemittel zurückgehalten wird, Informationen umfasst über einen Ursprung, von welchem die Anweisung angefordert wurde, eine Anwendung, deren Zustand mit der Anweisung verändert werden soll, und einen Zustand, in welchen mittels der Anweisung übergegangen werden soll.

5. Die Informationsverarbeitungsvorrichtung (1) gemäß einem der Ansprüche 1 bis 4,
wobei das Anweisungs-Sende/Empfangs-Gerät (54) eine Entsprechung-Tabelle von Anweisungen hat, von denen jede durch das Systemzustandsübergans-Verwaltungsgerät (53) oder das Anwendungszustandsübergans-Verwaltungsgerät (52) erkannt werden kann, wobei die Anweisungs-Entsprechungs-Tabelle als Information dient zum Anzeigen einer Beziehung zwischen den Anweisungen, von denen jede durch das Systemzustandsübergans-Verwaltungsgerät (53) oder das Anwendungszustandsübergans-Verwaltungsgerät (52) erkannt werden kann.

6. Ein Verfahren zur Informationsverarbeitung für eine Informationsverarbeitungsvorrichtung geeignet zum Ausführen einer Anwendung,
wobei das Verfahren die folgenden Schritte umfasst:
Veranlassen eines ersten Moduls zum Definieren eines Übergangs eines Zustands der Anwendung unter Verwendung eines primitiven Elements zur Verwaltung des Zustandsübergangs, um einen Zustandsübergangsbefehl anzunehmen und den Zustandsübergangsbefehl einem zweiten Modul zur Verfügung zu stellen;
Veranlassen des zweiten Moduls, den Zustandsübergangsbefehl umzuwandeln in eine Anweisung, welche durch ein drittes Modul erkannt werden kann zum Verwalten eines Zustandsübergangs in Abhängigkeit von einem System, auf welchem die Anwendung operiert,
Veranlassen des dritten Moduls, welches die umgewandelte Anweisung empfangen hat, zu bestimmen, ob oder ob nicht der Zustand des Systems überführt werden muss basierend auf dem Zustandsübergangsbefehl,
Veranlassen des zweiten Moduls zum Umwandeln eines Ergebnisses der Bestimmung ausgeführt durch das dritte Modul in eine Mitteilung, welche durch das erste Modul erkannt werden kann, und zum Senden der Mitteilung zu dem ersten Modul, und
Veranlassen des zweiten Moduls eine Vielzahl von Anwendungszustandsübergangsanweisungen zurückzuhalten, um den Inhalt der zurückgehaltenen Anweisungen zu verifizieren und, wenn überhaupt, die Anweisungen innerhalb der zurückgehaltenen Anweisungen zu verwerfen, welche sich gegenseitig aufheben können.

7. Ein mittels eines Computers ausführbares Programm,
wobei das Programm ein erstes Modul, ein zweites Modul und ein drittes Modul umfasst und wobei das Programm einen Computer zur Ausführung der folgenden Schritte veranlasst:
Veranlassen des ersten Moduls zum Definierten eines Übergangs eines Zustands der Anwendung unter Verwendung eines primitiven Elements zur Verwaltung des Zustandsübergangs, um einen Zustandsübergangsbefehl anzunehmen und den Zustandsübergangsbefehl einem zweiten Modul zur Verfügung zu stellen;
Veranlassen des zweiten Moduls, den Zustandsübergangsbefehl umzuwandeln in eine Anweisung, welche durch ein drittes Modul erkannt werden kann zum Verwalten eines Zustandsübergangs in Abhängigkeit von einem System, auf welchem die Anwendung operiert,
Veranlassen des dritten Moduls, welches die umgewandelte Anweisung empfangen hat, zu bestimmen, ob oder ob nicht der Zustand des Systems überführt werden muss basierend auf dem Zustandsübergangsbefehl,
Veranlassen des zweiten Moduls zum Umwandeln eines Ergebnisses der Bestimmung ausgeführt durch das dritte Modul in eine Mitteilung, welche durch das erste Modul erkannt werden kann, und zum Senden der Mitteilung zu dem ersten Modul, und
Veranlassen des zweiten Moduls eine Vielzahl von Anwendungszustandsübergangsanweisungen zurückzuhalten, um den Inhalt der zurückgehaltenen Anweisungen zu verifizieren und, wenn überhaupt, die Anweisungen innerhalb der zurückgehaltenen Anweisungen zu verwerfen, welche sich gegenseitig aufheben können.

8. Ein Speichermedium mit einem darauf gespeicherten Programm gemäß Anspruch 7.

## Revendications

1. Appareil de traitement d'informations (1) pouvant exécuter une application, l'appareil comportant :
un moyen de gestion de transition d'état de système (53) pour gérer une transition d'un état qui dépend un système sur lequel l'application fonctionne ;
un moyen de gestion de transition d'état d'application (52) pour définir la transition d'état de l'application en utilisant un élément primitif de manière à gérer la transition d'état de l'application ; et
un moyen d'émission/réception d'instruction (54) pour mémoriser une information indiquant une relation entre des instructions chacune étant reconnaissable par le moyen de gestion de transition d'état de système (53) ou le moyen de gestion de transition d'état d'application (52) et, en fonction de l'information, l'exécution de l'émission/ réception des instructions vers et depuis le moyen de gestion de transition d'état de système (53) et le moyen de gestion de transition d'état d'application (52),
dans lequel le moyen de gestion de transition d'état d'application (52) comprend un moyen de retenue d'information pour retenir une pluralité d'instructions de transition d'état d'application ; et qui peut vérifier les contenus des instructions retenues et décharger, s'il y a lieu, ces instructions parmi les instructions retenues qui peuvent se compenser.

2. Appareil de traitement d'informations (1) selon la revendication 1, dans lequel le moyen de retenue d'instruction est adapté pour exécuter chacune des instructions retenues selon le procédé FIFO.

3. Appareil de traitement d'informations selon la revendication 2, dans lequel chacune des instructions de transition d'état d'application retenue dans le moyen de retenue d'instruction comprend une information indiquant si oui ou non il est nécessaire d'attendre l'achèvement de l'exécution de l'instruction.

4. Appareil de traitement d'informations selon la revendication 2 ou 3, dans lequel :
le moyen de gestion de transition d'état d'application (52) peut gérer des transitions d'état d'une pluralité d'applications ; et
chacune des instructions de transition d'état d'application retenues par le moyen de retenue d'instruction comprend une information concernant l'origine à partir de laquelle l'instruction a été demandée, une application dont la transition d'état doit être effectuée par l'instruction, et une transition d'état prévue pour être effectuée par l'instruction.

5. Appareil de traitement d'informations selon l'une des revendications 1 à 4, dans lequel le moyen d'émission/réception d'instruction possède une table de correspondance d'instruction chacune étant reconnaissable par le moyen de gestion de transition d'état de système (53) ou le moyen de gestion de transition d'état d'application (52), la table de correspondance d'instruction étant utilisée en tant qu'information indiquant une relation entre les instructions chacune étant reconnaissable par le moyen de gestion de transition d'état de système (53) ou le moyen de gestion de transition d'état d'application (52).

6. Procédé de traitement d'informations pour un appareil de traitement d'informations pouvant exécuter une application, le procédé comportant les étapes consistant à :
amener un premier module à définir une transition d'un état de l'application en utilisant un élément primitif de manière à gérer la transition d'état pour acquérir une commande de transition d'état et délivrer la commande de transition d'état à un second module ;
amener le second module à convertir la commande de transition d'état en une instruction reconnaissable par un troisième module pour gérer une transition d'état en fonction d'un système sur lequel l'application fonctionne ;
amener le troisième module qui a reçu l'instruction convertie à déterminer si oui ou non une transition d'état du système doit être effectuée en fonction de la commande de transition d'état ;
amener le second module à convertir un résultat de la détermination effectuée par le troisième module en une notification reconnaissable par le premier module et envoyer la notification au premier module ; et
amener le second module à retenir une pluralité d'instructions de transition d'état d'application, à vérifier les contenus des instructions retenues et à décharger, s'il y a lieu, les instructions parmi les instructions retenues qui peuvent se compenser.

7. Programme pouvant être exécuté par un ordinateur dans lequel :
le programme comprend un premier module, un second module, et un troisième module ; et
le programme amène un ordinateur à exécuter les étapes consistant à
amener le premier module à définir une transition d'un état de l'application en utilisant un élément primitif de manière à gérer la transition d'état pour acquérir une commande de transition d'état et délivrer la commande de transition d'état au second module,
amener le second module à convertir la commande de transition d'état en une instruction reconnaissable par le troisième module pour gérer une transition d'état en fonction d'un système sur lequel l'application fonctionne,
amener le troisième module qui a reçu l'instruction convertie à déterminer si oui ou non une transition d'état du système doit être effectuée en fonction de la commande de transition d'état,
amener le second module à convertir un résultat de la détermination effectuée par le troisième module en une notification reconnaissable par le premier module et envoyer la notification au premier module ; et
amener le second module à retenir une pluralité d'instructions de transition d'état d'application, à vérifier le contenu des instructions retenues et à décharger, s'il y a lieu, ces instructions parmi les instructions retenues qui peuvent se compenser.

8. Support d'enregistrement comportant le programme enregistré selon la revendication 7.
